# FASCICULE DE BREVET EUROPEEN

(11) **EP 3 007 460 B1**
(45) Date de publication et mention de la délivrance du brevet: **19.07.2017**
(21) Numéro de dépôt: 15189201.5
(22) Date de dépôt: 09.10.2015
(51) Int. Cl.: B60R 11/00, B60N 2/48, H04R 1/02, H04R 5/02, B60R 11/02

(54) **APPUI-TÊTE DE SIÈGE DE VÉHICULE AUTOMOBILE**
KOPFSTÜTZE FÜR KRAFTFAHRZEUGSITZ
HEADREST FOR A MOTOR VEHICLE SEAT

(30) Priorité: 10.10.2014 FR 1459758
(43) Date de publication de la demande: 13.04.2016
(73) Titulaire: Cera TSC, 75008 Paris (FR)
(72) Inventeur: GANIER, David, 02190 Guignicourt (FR)
(74) Mandataire: Sayettat, Julien Christian

(56) Documents cités:
- WO-A1-93/01951
- WO-A1-99/08478
- DE-U- 1 943 448
- FR-A1- 2 620 293
- JP-A- H04 325 338
- US-A1- 2003 081 795
- US-A1- 2014 270 322

## Description

L'invention concerne un appui-tête de siège de véhicule automobile et un procédé de réalisation d'un tel appui-tête.

Il est connu de réaliser un appui-tête de siège de véhicule automobile, ledit appui-tête comprenant :
- une armature de montage sur un dossier dudit siège,
- une structure de montage d'un haut-parleur, ladite structure étant associée en partie supérieure de ladite armature,
- un bloc moulé de rembourrage en mousse élastiquement compressible recouvrant ladite structure, ledit bloc étant pourvu d'un orifice définissant un conduit destiné à permettre la propagation des ondes sonores émises par ledit haut-parleur,
- et une coiffe de revêtement dudit bloc.

Afin de protéger le haut-parleur, il est connu d'obturer le conduit par une grille de protection affleurant la coiffe.

Une telle réalisation peut s'avérer d'une esthétique médiocre, ceci du fait de la présence de la grille qui occupe une forte présence visuelle pour l'occupant du véhicule. Du document WO93/01951 A1 on connaît un appui-tête, qui montre les caractéristiques du préambule de la revendication 1. L'invention a pour but de pallier cet inconvénient.

A cet effet, et selon un premier aspect, l'invention propose un appui-tête de siège de véhicule automobile, ledit appui-tête comprenant :
- une armature de montage sur un dossier dudit siège,
- une structure de montage d'un haut-parleur, ladite structure étant associée en partie supérieure de ladite armature,
- ledit haut-parleur associé à ladite structure,
- un bloc moulé de rembourrage en mousse élastiquement compressible recouvrant ladite structure, ledit bloc étant pourvu d'un orifice débouchant sur ledit haut-parleur et définissant un conduit destiné à permettre la propagation des ondes sonores émises par ledit haut-parleur,
- et une coiffe de revêtement dudit bloc,
ladite coiffe étant formée d'une pluralité d'éléments de revêtement souples associés entre eux, l'un desdits éléments étant conformé de manière à présenter :
- une paroi tubulaire de revêtement dudit conduit, de sorte que ledit élément permette un guidage des ondes sonores,
- une paroi de fond de conduit poreuse destinée à assurer une protection dudit haut-parleur tout en permettant le passage des ondes sonores.

Dans cette description, les termes de positionnement dans l'espace (supérieur, horizontal, latéral, ...) sont pris en référence à l'appui-tête disposé en configuration d'utilisation dans le véhicule.

Avec l'agencement proposé, la grille de protection usuellement utilisée est remplacée par la paroi poreuse qui est disposée en fond du conduit, ce qui permet de résoudre le préjudice esthétique sus explicité.

En outre, le conduit est revêtu par la paroi tubulaire, ce qui permet de masquer la mousse du bloc.

Selon un deuxième aspect, l'invention concerne un procédé de réalisation d'un tel appui-tête.

D'autres particularités et avantages de l'invention apparaîtront dans la description qui suit, faite en référence aux figures jointes, dans lesquelles :
- la figure 1 est une représentation schématique en coupe horizontale partielle d'un appui-tête selon une première réalisation,
- la figure 2 est une représentation schématique en coupe horizontale partielle d'un appui-tête selon une deuxième réalisation.

En référence aux figures, on décrit un appui-tête 1 de siège de véhicule automobile, ledit appui-tête comprenant :
- une armature 2 de montage sur un dossier dudit siège, notamment à base de tube métallique replié en U renversé de manière à définir deux branches 3 parallèles d'association audit dossier,
- une structure 4 - notamment à base de matière plastique moulée par injection - de montage d'un haut-parleur 5, ladite structure étant associée en partie supérieure de ladite armature,
- ledit haut-parleur associé à ladite structure,
- un bloc 6 moulé de rembourrage en mousse élastiquement compressible - notamment de polyuréthane - recouvrant ladite structure, ledit bloc étant pourvu d'un orifice 7 débouchant sur ledit haut-parleur et définissant un conduit destiné à permettre la propagation des ondes sonores émises par ledit haut-parleur,
- et une coiffe 8 de revêtement dudit bloc,
ladite coiffe étant formée d'une pluralité d'éléments 9,9a de revêtement - notamment à base de textile ou cuir - souples - notamment de dureté inférieure à 50 shores afin d'assurer une sécurité optimale à l'occupant du siège - associés entre eux - notamment par couture 10 et/ou par soudure - l'un desdits éléments 9a étant conformé de manière à présenter :
- une paroi tubulaire 11 de revêtement dudit conduit, de sorte que ledit élément permette un guidage des ondes sonores,
- une paroi de fond de conduit 12 poreuse destinée à assurer une protection dudit haut-parleur tout en permettant le passage des ondes sonores.

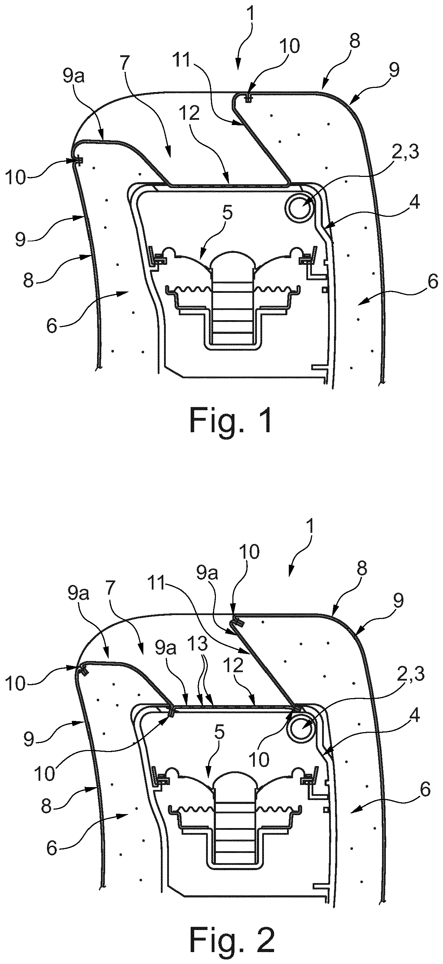

Selon la réalisation de la figure 1, l'élément conformé 9a est à base de matériau élastomère moulé.

La paroi de fond de conduit 12 est ici sous forme de grille issue de moulage.

Selon la réalisation de la figure 2, l'élément conformé 9a est confectionné - notamment par couture 10 ou soudure - à partir d'au moins un format de feuille de matériau souple - par exemple à base de textile enduit de plastique, textile ou matière plastique.

La paroi de fond de conduit 12 est à base de feuille poreuse - par exemple à base de textile ou de non tissé - ou, dans la réalisation représentée, de feuille étanche - par exemple à base de matière plastique - pourvue d'une pluralité de trous 13.

Selon une réalisation, la coiffe 8 est chaussée sur le bloc 6, l'élément conformé 9a s'emboitant dans l'orifice 7.

Selon une autre réalisation, la coiffe 8 est surmoulée par le bloc 6, ladite coiffe étant étanche à la mousse en toute zone située hors de la paroi de fond de conduit 12.

Avec une telle réalisation, la mousse du bloc 6 surmoule l'élément conformé 9a, ce qui permet un maintien efficace dudit élément si la mousse peut lui adhérer.

Dans le cas d'une impossibilité d'adhésion entre la mousse et l'élément conformé 9a, de par la nature des matériaux utilisés pour la mousse et ledit élément, on peut prévoir, de façon non représentée, au moins une saillie d'ancrage dudit élément dans la mousse.

On décrit à présent un procédé de réalisation d'un appui-tête 1, ledit procédé comprenant les étapes suivantes :
- prévoir une armature 2 de montage dudit appui-tête sur un dossier dudit siège, ladite armature étant pourvue en sa partie supérieure d'une structure 4 de montage d'un haut-parleur 5 et dudit haut-parleur,
- confectionner une coiffe 8 formée d'une pluralité d'éléments 9,9a de revêtement souples associés entre eux, l'un desdits éléments 9a étant conformé de manière à présenter une paroi tubulaire 11 et une paroi de fond de conduit 12 poreuse,

- recouvrir, notamment par surmoulage, ladite structure d'un bloc 6 moulé de mousse élastiquement compressible, ledit bloc étant pourvu d'un orifice 7 débouchant sur ledit haut-parleur et définissant un conduit destiné à permettre la propagation des ondes sonores émises par ledit haut-parleur,
- revêtir ledit bloc avec ladite coiffe, ledit élément conformé étant disposé dans ledit orifice, ladite paroi tubulaire revêtant ledit conduit, et ladite paroi de fond de conduit étant disposée en fond dudit conduit.

Selon une réalisation, le procédé prévoit que la coiffe 8 soit disposée en revêtement du bloc 6 par chaussage.

Selon une autre réalisation, le procédé prévoit que la coiffe 8 soit disposée dans le moule de moulage du bloc 6, ladite coiffe étant étanche à la mousse en toute zone située hors de la paroi de fond de conduit 12, un mélange précurseur de mousse élastiquement compressible étant versé dans ladite coiffe de manière à conduire audit bloc surmoulant ladite coiffe.

## Revendications

1. Appui-tête (1) de siège de véhicule automobile, ledit appui-tête comprenant :
• une armature (2) de montage sur un dossier dudit siège,
• une structure (4) de montage d'un haut-parleur (5), ladite structure étant associée en partie supérieure de ladite armature,
• ledit haut-parleur associé à ladite structure,
• un bloc (6) moulé de rembourrage en mousse élastiquement compressible recouvrant ladite structure, ledit bloc étant pourvu d'un orifice (7) débouchant sur ledit haut-parleur et définissant un conduit destiné à permettre la propagation des ondes sonores émises par ledit haut-parleur,
• et une coiffe (8) de revêtement dudit bloc,
ledit appui-tête étant **caractérisé en ce que** ladite coiffe est formée d'une pluralité d'éléments (9,9a) de revêtement souples associés entre eux, l'un desdits éléments (9a) étant conformé de manière à présenter :
• une paroi tubulaire (11) de revêtement dudit conduit, de sorte que ledit élément permette un guidage des ondes sonores,
• une paroi de fond de conduit (12) poreuse destinée à assurer une protection dudit haut-parleur tout en permettant le passage des ondes sonores.

2. Appui-tête selon la revendication 1, **caractérisé en ce que** l'élément conformé (9a) est à base de matériau élastomère moulé.

3. Appui-tête selon la revendication 2, **caractérisé en ce que** la paroi de fond de conduit (12) est sous forme de grille issue de moulage.

4. Appui-tête selon la revendication 1, **caractérisé en ce que** l'élément conformé (9a) est confectionné à partir d'au moins un format de feuille de matériau souple.

5. Appui-tête selon la revendication 4, **caractérisé en ce que** la paroi de fond de conduit (12) est à base de feuille poreuse ou de feuille étanche pourvue d'une pluralité de trous (13).

6. Appui-tête selon l'une quelconque des revendications 1 à 5, **caractérisé en ce que** la coiffe (8) est chaussée sur le bloc (6), l'élément conformé (9a) s'emboitant dans l'orifice (7).

7. Appui-tête selon l'une quelconque des revendications 1 à 5, **caractérisé en ce que** la coiffe (8) est surmoulée par le bloc (6), ladite coiffe étant étanche à la mousse en toute zone située hors de la paroi de fond de conduit (12).

8. Procédé de réalisation d'un appui-tête (1) selon l'une quelconque des revendications 1 à 7, ledit procédé comprenant les étapes suivantes :
• prévoir une armature (2) de montage dudit appui-tête sur un dossier dudit siège, ladite armature étant pourvue en sa partie supérieure d'une structure (4) de montage d'un haut-parleur (5) et dudit haut-parleur,
• confectionner une coiffe (8) formée d'une pluralité d'éléments (9,9a) de revêtement souples associés entre eux, l'un desdits éléments (9a) étant conformé de manière à présenter une paroi tubulaire (11) et une paroi de fond de conduit (12) poreuse,
• recouvrir, notamment par surmoulage, ladite structure d'un bloc (6) moulé de mousse élastiquement compressible, ledit bloc étant pourvu d'un orifice (7) débouchant sur ledit haut-parleur et définissant un conduit destiné à permettre la propagation des ondes sonores émises par ledit haut-parleur,
• revêtir ledit bloc avec ladite coiffe, ledit élément conformé étant disposé dans ledit orifice, ladite paroi tubulaire revêtant ledit conduit, et ladite paroi de fond de conduit étant disposée en fond dudit conduit.

9. Procédé selon la revendication 8 quand elle se rattache à la revendication 6, **caractérisé en ce que** la coiffe (8) est disposée en revêtement du bloc (6) par chaussage.

10. Procédé selon la revendication 8 quand elle se rattache à la revendication 7, **caractérisé en ce que** la coiffe (8) est disposée dans le moule de moulage du bloc (6), ladite coiffe étant étanche à la mousse en toute zone située hors de la paroi de fond de conduit (12), un mélange précurseur de mousse élastiquement compressible étant versé dans ladite coiffe de manière à conduire audit bloc surmoulant ladite coiffe.

## Patentansprüche

1. Kopfstütze (1) eines Kraftfahrzeugsitzes, wobei die besagte Kopfstütze umfasst:
- ein Gestell (2) zur Montage auf einer Rückenlehne des besagten Sitzes,
- eine Struktur (4) zur Montage eines Lautsprechers (5), wobei die besagte Struktur im oberen Abschnitt des besagten Gestells zugeordnet ist,
- den besagten der besagten Struktur zugeordneten Lautsprecher,
- einen gussgeformten Block (6) zur Polsterung aus einem elastisch verdichtbaren Schaumstoff, der die besagte Struktur überzieht, wobei der besagte Block mit einer Öffnung (7) versehen ist, die in den besagten Lautsprecher mündet und einen Kanal definiert, der dazu bestimmt ist, die Ausbreitung der Schallwellen zu ermöglichen, die vom besagten Lautsprecher abgestrahlt werden,
- und eine Abdeckung (8) zum Verkleiden des besagten Blocks, wobei die besagte Kopfstütze **dadurch gekennzeichnet ist, dass** die besagte Abdeckung durch eine Vielzahl von biegsamen Verkleidungselementen (9, 9a) gebildet wird, die miteinander verknüpft sind, wobei eines der besagten Elemente (9a) ausgeformt ist, um aufzuweisen:
- eine rohrförmige Wand (11) zum Verkleiden des besagten Kanals, sodass das besagte Element eine Führung der Schallwellen ermöglicht,
- eine poröse Kanalrückwand (12), die dazu bestimmt ist, für einen Schutz des besagten Lautsprechers zu sorgen, und dabei den Durchlass der Schallwellen zu ermöglichen.

2. Kopfstütze nach Anspruch 1, **dadurch gekennzeichnet, dass** das ausgeformte Element (9a) auf einem gussgeformten Elastomermaterial basiert.

3. Kopfstütze nach Anspruch 2, **dadurch gekennzeichnet, dass** die Kanalrückwand (12) in Form eines Gitters ist, das aus einem Formguss stammt.

4. Kopfstütze nach Anspruch 1, **dadurch gekennzeichnet, dass** das ausgeformte Element (9a) aus zumindest einem Bogenformat aus einem biegsamen Material angefertigt ist.

5. Kopfstütze nach Anspruch 4, **dadurch gekennzeichnet, dass** die Kanalrückwand (12) auf einem porösen Bogen oder einem dichten Bogen basiert, der mit einer Vielzahl von Löchern (13) versehen ist.

6. Kopfstütze nach einem der Ansprüche 1 bis 5, **dadurch gekennzeichnet, dass** die Abdeckung (8) auf dem Block (6) aufgezogen ist, wobei sich das ausgeformte Element (9a) in die Öffnung (7) einpasst.

7. Kopfstütze nach einem der Ansprüche 1 bis 5, **dadurch gekennzeichnet, dass** die Abdeckung (8) durch den Block (6) aufgeformt ist, wobei die besagte Abdeckung in jeder Zone schaumstoffdicht ist, die sich außerhalb der Kanalrückwand (12) befindet.

8. Verfahren zur Herstellung einer Kopfstütze (1) nach einem der Ansprüche 1 bis 7, wobei das besagte Verfahren die folgenden Schritte umfasst:
- Vorsehen eines Gestells (2) zur Montage der besagten Kopfstütze auf einer Rückenlehne des besagten Sitzes, wobei das besagte Gestell in seinem oberen Abschnitt mit einer Struktur (4) zur Montage eines Lautsprechers (5) und dem besagten Lautsprecher versehen ist,
- Anfertigen einer Abdeckung (8), die durch eine Vielzahl von biegsamen Verkleidungselementen (9, 9a) gebildet wird, die miteinander verknüpft sind, wobei eines der Elemente (9a) ausgeformt ist, um eine rohrförmige Wand (11) und eine poröse Kanalrückwand (12) aufzuweisen,
- Überziehen, insbesondere durch Aufformen der besagten Struktur mit einem gussgeformten Block (6) aus einem elastisch verdichtbaren Schaumstoff, wobei der besagte Block mit einer Öffnung (7) versehen ist, die in den besagten Lautsprecher mündet und einen Kanal definiert, der dazu bestimmt ist, die Ausbreitung der Schallwellen zu ermöglichen, die vom besagten Lautsprecher abgestrahlt werden,
- Verkleiden des besagten Blocks mit der besagten Abdeckung, wobei das besagte ausgeformte Element in der besagten Öffnung angeordnet ist, die besagte rohrförmige Wand den besagten Kanal verkleidet, und die besagte Kanalrückwand im Hintergrund des besagten Kanals angeordnet ist.

9. Verfahren nach Anspruch 8, wenn er mit Anspruch 6 in Verbindung steht, **dadurch gekennzeichnet, dass** die Abdeckung (8) als Verkleidung des Blocks (6) durch Aufziehen angeordnet ist.

10. Verfahren nach Anspruch 8, wenn er mit Anspruch 7 in Verbindung steht, **dadurch gekennzeichnet, dass** die Abdeckung (8) in der Form zum Gießformen des Blocks (6) angeordnet ist, wobei die besagte Abdeckung in jeder Zone schaumstoffdicht ist, die sich außerhalb der Kanalrückwand (12) befindet, wobei ein Vorläufergemisch eines elastisch verdichtbaren Schaumstoffes in die besagte Abdeckung gegossen wird, um zum besagten Block zu führen, der die besagte Abdeckung aufformt.

## Claims

1. Head support (1) for a seat of an automotive vehicle, said head support comprising:
- a mounting bracket (2) on a backrest of said seat,
- a mounting structure (4) for a speaker (5), said structure being connected to the upper section of said bracket,
- said speaker connected to said structure,
- a moulded, upholstered foam block (6), elastically compressible covering said structure, said block being equipped with an orifice (7) leading to said speaker and defining a duct intended to enable the propagation of sound waves released by said speaker,
- and a cover (8) for said block,
said head support being **characterised in that** said cover is formed by multiple flexible covered elements (9, 9a) connected to each other, one of said elements (9a) being conformed in a way to present:
- a tubular covered wall (11) of said duct, so that said element enables sound waves to be directed,
- a porous bottom duct wall (12) intended to ensure protection of said speaker, while allowing the passing through of sound waves.

2. Head support according to claim 1, **characterised in that** the conforming element (9a) is of a moulded elastomer material base.

3. Head support according to claim 2, **characterised in that** the bottom duct wall (12) is in the form of a grid coming from being moulded.

4. Head support according to claim 1, **characterised in that** the conforming element (9a) is made from at least one flexible material sheet format.

5. Head support according to claim 4, **characterised in that** the bottom duct wall (12) is porous sheet or watertight sheet-based, equipped with multiple holes (13).

6. Head support according to any one of the claims 1 to 5, **characterised in that** the cover (8) is put on the block (6), the conforming element (9a) being slotted into the orifice (7).

7. Head support according to any one of the claims 1 to 5, **characterised in that** the cover (8) is over-moulded by the block (6), said cover being watertight and made from foam in any area located outside of the bottom duct wall (12).

8. Method of producing a head support (1) according to any one of the claims 1 to 7, said method comprising the following steps:
- providing for a mounting bracket (2) of said head support on a backrest of said seat, said bracket being equipped on its upper section with a mounting structure (4) of a speaker (5) and of said speaker,
- making a cover (8) formed by multiple, flexible covered elements (9, 9a) connected to each other, one of said elements (9a) being conformed in a way to present a tubular wall (11) and a porous bottom duct wall (12),
- upholstering, in particular by over-moulding, said structure of a block (6) moulded with elastically compressible foam, said block being equipped with an orifice (7) leading to said speaker and defining a duct intended to enable the propagation of sound waves released by said speaker,
- covering said block with said cover, said conforming element being positioned in said orifice, said tubular wall covering said duct, and said bottom duct wall being positioned at the bottom of said duct.

9. Method according to claim 8, when it is connected to claim 6, **characterised in that** the cover (8) is positioned covering the block (6) by being put on it.

10. Method according to claim 8, when it is connected to claim 7, **characterised in that** the cover (8) is positioned in the mould of moulding the block (6), said cover being watertight and made from foam in any area located outside of the bottom duct wall (12), a precursory, elastically compressible foam mix being poured into said cover, in a way to leading to said block over-moulding said cover.
